# FASCICULE DE BREVET EUROPEEN

(11) **EP 1 114 692 B1**
(45) Date de publication et mention de la délivrance du brevet: **14.04.2004**
(21) Numéro de dépôt: 01400013.7
(22) Date de dépôt: 04.01.2001
(51) Int. Cl.: B23P 19/04, F02F 7/00

(54) **Procédé pour introduire un piston dans un cylindre d'un moteur à combustion interne et dispositif de mise en oeuvre du procédé**
Verfahren zum Einsetzen eines Kolbens in einem Zylinder einer Brennkraftmaschine und Vorrichtung zur Durchführung des Verfahrens
Method of inserting a piston in a cylinder of an internal combustion engine and device for carrying out the method

(30) Priorité: 05.01.2000 FR 0000078
(43) Date de publication de la demande: 11.07.2001
(73) Titulaire: Francaise de Mecanique, 62138 Douvrin (FR)
(72) Inventeur: Bardet, Dominique, 62300 Lens (FR)
(74) Mandataire: De Cuenca, Emmanuel Jaime

(56) Documents cités:
- DE-A- 4 408 237
- FR-A- 2 721 849
- PATENT ABSTRACTS OF JAPAN vol. 1999, no. 05, 31 mai 1999 (1999-05-31) -& JP 11 033847 A (HONDA MOTOR CO LTD), 9 février 1999 (1999-02-09)
- PATENT ABSTRACTS OF JAPAN vol. 1998, no. 10, 31 août 1998 (1998-08-31) -& JP 10 138060 A (MITSUBISHI MOTORS CORP), 26 mai 1998 (1998-05-26)
- PATENT ABSTRACTS OF JAPAN vol. 1995, no. 04, 31 mai 1995 (1995-05-31) -& JP 07 009271 A (MITSUBISHI MOTORS CORP), 13 janvier 1995 (1995-01-13)

## Description

L'invention se rapporte à un procédé pour introduire un piston dans un cylindre ou une chemise d'un cylindre d'un moteur à combustion interne, ainsi qu'à un dispositif de mise oeuvre du procédé.

L'invention concerne plus particulièrement un procédé et un dispositif pour introduire un piston dans une cavité cylindrique, notamment dans un cylindre ou une chemise d'un cylindre d'un moteur à combustion interne. Un tel piston est articulé sur une bielle et comporte, sur sa surface périphérique, des gorges annulaires dans lesquelles sont disposés des segments fendus et élastiques. Les segments annulaires ont un diamètre plus grand que celui du piston, de façon à ce qu'ils s'appliquent par élasticité contre la paroi du cylindre ou de la chemise correspondante.

Ainsi, pour introduire le piston dans sa cavité cylindrique, il est nécessaire de comprimer les segments radialement vers l'intérieur du piston. Cette opération est réalisée en général à l'aide de deux mâchoires concaves associées à un mécanisme de serrage. Lorsque les deux mâchoires sont refermées sur le piston, elles constituent un tube cylindrique de diamètre légèrement inférieur au diamètre de la cavité cylindrique.

Cependant, cette opération s'avère difficile à réaliser et peu fiable en raison notamment du jeu prévu pour les segments dans leur gorge. En effet, lors de leur fermeture, les mâchoires compriment en premier lieu les segments et peuvent provoquer un faible déplacement angulaire du piston par rapport à la bielle et aux mâchoires. Ce léger décalage angulaire du piston peut entraîner un coincement d'un ou plusieurs segments entre les mâchoires et la surface extérieure du piston. Le coincement des segments empêche la fermeture complète des mâchoires et donc l'introduction du piston dans sa cavité cylindrique. Ce type de problème peut entraîner l'arrêt d'une ligne automatique d'assemblage.

Par ailleurs, lorsque le piston est introduit dans sa cavité cylindrique et que ses segments sont mal positionnés, il peut en résulter une détérioration du carter et/ou des pistons et donc un dysfonctionnement du moteur correspondant.

Les documents JP11033847 A et FR-A-2 721 849 A décrivent des procédés pour introduire un piston dans une cavité cylindrique, comportant une étape de compression du ou des segments dans leurs gorges respectives, l'étape de compression étant précédée d'une étape de positionnement et de maintien du piston dans une position déterminée dans laquelle les axes de symétrie longitudinaux du piston et de la bielle sont alignés et coïncident avec un plan médian, conformes au préambule de la revendication indépendante de procédé.

Selon ces documents, le maintien et le positionnement du piston sont réalisés par un appui sur l'extrémité arrière de la jupe du piston. C'est-à-dire que la direction de l'appui est parallèle à l'axe longitudinal de la bielle et du piston.

Cependant, ce type de maintien et positionnement n'est pas totalement satisfaisant. En effet, le positionnement peut être altéré soit par des dispersions de dimensions de la jupe du piston, soit lors de la compression des segments.

Un but de la présente invention est de proposer un procédé pour introduire un piston dans une cavité cylindrique, palliant tout ou partie des inconvénients de l'art antérieur relevés ci-dessus.

Ce but est atteint par le fait que l'étape de positionnement et de maintien consiste à exercer au moins deux appuis selon une direction perpendiculaire au plan médian et sensiblement diamétralement opposés sur la surface extérieure du piston qui est située au niveau et/ou à l'arrière d'un plan transverse au piston et passant par l'axe d'articulation du piston sur la bielle, conformément à la partie caractérisante de la revendication principale de procédé.

Par ailleurs, l'invention peut comporter l'une ou plusieurs des caractéristiques suivantes :
- l'étape de positionnement et de maintien consiste à exercer au moins deux appuis diamétralement opposés sur la partie arrière ou jupe du piston.

Un autre but de la présente invention est de proposer un dispositif pour introduire un piston dans une cavité cylindrique palliant tout ou partie des inconvénients de l'art antérieur relevés ci-dessus.

Ce but est atteint par le fait que le dispositif pour introduire un piston dans une cavité cylindrique conforme au préambule de la revendication indépendante de dispositif et décrit dans le document FR-A-2 721 849, comporte au moins une paire de mâchoires associées à un mécanisme de serrage apte à écarter ou rapprocher les mâchoires pour compresser les segments, des moyens de positionnement et de maintien du piston dans une position déterminée dans laquelle les axes de symétrie longitudinaux du piston et de la bielle sont alignés et coïncident avec un plan médian. Selon la partie caractérisante, les moyens de positionnement sont conformés pour exercer au moins deux appuis selon une direction perpendiculaire au plan médian et sensiblement diamétralement opposés sur la surface extérieure du piston qui est située au niveau et/ou à l'arrière d'un plan transversal au piston et passant par l'axe d'articulation du piston sur la bielle.

Par ailleurs, l'invention peut comporter l'une ou plusieurs des caractéristiques suivantes :
- les moyens de positionnement sont conformés pour exercer au moins deux appuis diamétralement opposés sur la surface extérieure du piston qui est située au niveau et/ou à l'arrière d'un plan transversal au piston et passant par l'axe d'articulation du piston sur la bielle,
- les moyens de positionnement comportent deux éléments d'appui mobiles par rapport aux mâchoires,
- le dispositif comporte deux mâchoires montées respectivement sur deux supports mobiles du mécanisme de serrage, et deux éléments d'appui montés respectivement sur les deux supports et/ou sur les deux mâchoires, de façon à faire saillie par rapport aux mâchoires dans une direction parallèle au déplacement desdites mâchoires lors du serrage, pour assurer le positionnement et le maintien du piston avant la compression des segments par les mâchoires, les éléments d'appui étant agencés de manière mobile par rapport respectivement aux deux supports et/ou aux deux mâchoires, pour permettre le rapprochement et le serrage des mâchoires sur le piston pendant le maintien de ce dernier par les éléments d'appui,
- le dispositif comporte des moyens élastiques sollicitant les éléments d'appui vers une position déterminée en saillie par rapport aux mâchoires, les moyens élastiques étant conformés pour autoriser le recul des éléments d'appui par rapport aux mâchoires lors du serrage des mâchoires sur le piston maintenu par les éléments d'appui,
- le dispositif comporte des moyens de butée limitant les déplacements de chacun des éléments d'appui entre une première position en saillie lors du desserrage des mâchoires, et une seconde position en retrait lors du serrage des mâchoires,
- les éléments d'appui sont reliés respectivement aux mâchoires au moyen de liaisons glissières correspondantes, permettant le coulissement des éléments d'appui par rapport aux mâchoires dans une direction parallèle au déplacement desdites mâchoires lors du serrage.

D'autres particularités et avantages apparaîtront à la lecture de la description ci-après, faite en référence aux figures dans lesquelles :
- la figure 1 représente une vue de côté et en coupe d'un exemple de réalisation préféré d'un dispositif pour introduire un piston dans une cavité cylindrique selon l'invention,
- la figure 2 représente une vue en perspective d'une mâchoire du dispositif de la figure 1,
- les figures 3 à 6 représentent respectivement quatre étapes successives d'un exemple de réalisation du procédé pour introduire un piston dans une cavité cylindrique selon l'invention.

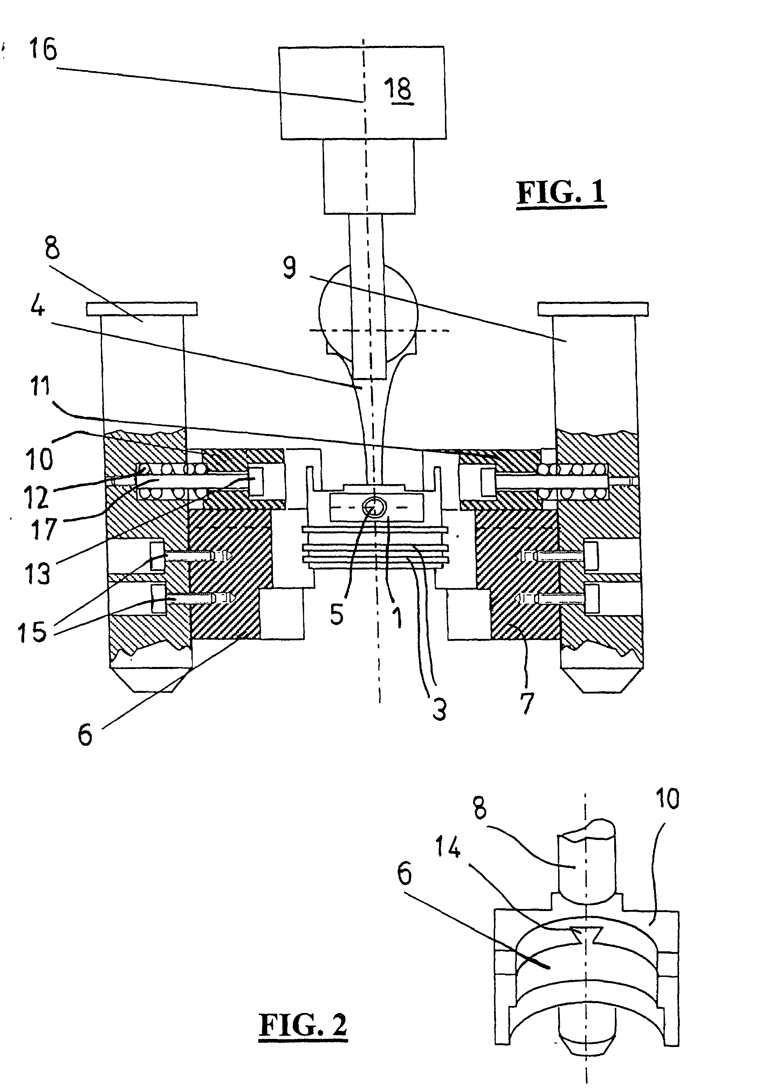

Le dispositif pour introduire un piston dans une cavité cylindrique représenté à la figure 1 comporte classiquement deux mâchoires 6, 7 ayant chacune la forme générale d'un demi-tube cylindrique (figure 2).

Les deux mâchoires 6, 7 sont montées respectivement sur deux supports 8, 9 mobiles d'un mécanisme de serrage. C'est-à-dire que les deux supports 8, 9 sont susceptibles d'être écartés ou rapprochés l'un de l'autre par un mécanisme d'entraînement connu en soi (non représenté). Le mécanisme d'entraînement des supports 8, 9 utilise, par exemple, un système à pignons et crémaillères qui déplace symétriquement les deux supports 8, 9 par rapport à un plan 16 médian. C'est-à-dire que les deux supports 8, 9 sont susceptibles d'être déplacés perpendiculairement à un plan 16 situé à égale distance des deux supports 8, 9.

Les mâchoires 6, 7 peuvent être rendues solidaires des supports 8, 9 au moyen, par exemple, de vis de fixation 15. Ainsi, le déplacement des supports 8, 9 permet d'écarter ou de rapprocher les mâchoires 6, 7, pour compresser les segments 3. A cet effet, l'ensemble bielle 4 et piston 1 est disposé dans le plan médian 16, entre les deux mâchoires 6, 7, de façon que l'axe de symétrie longitudinal de la bielle 4 coïncide avec le plan médian 16.

Selon l'invention, le dispositif comporte des moyens 10, 11 de positionnement et de maintien du piston 1 dans une position déterminée dans laquelle les axes de symétrie longitudinaux du piston 1 et de la bielle 4 sont alignés.

De préférence, les moyens de positionnement sont constitués de deux éléments d'appui 10, 11 montés respectivement sur les deux ensembles support-mâchoires 8, 6 et 7, 9. Chacun des éléments d'appui 10, 11 peut avoir la forme générale d'une demi-bague ou d'un demi-tube cylindrique dont le diamètre intérieur est identique à celui des deux mâchoires 6, 7. Par exemple, les deux éléments d'appui 10, 11 sont montés coulissants respectivement sur les eux mâchoires 6, 7 selon une direction perpendiculaire au plan médian 16. A cet effet, une liaison glissière est formée entre chaque mâchoire 6, 7 et l'élément d'appui correspondant 10, 11. La liaison glissière peut être constituée par un tenon 14 de section trapézoïdale formé par la mâchoire 6, 7 qui coulisse dans une gorge de forme complémentaire formée dans l'élément d'appui correspondant 10, 11.

Par ailleurs, chacun des éléments d'appui 10, 11 comporte un alésage central pour permettre son montage sur un axe de guidage respectif 17. Chacun des axes de guidage 17 est agencé perpendiculairement au plan médian 16 et comporte une première extrémité rendue solidaire du support 8, 9 correspondant. La seconde extrémité des axes de guidage 17 comporte une tête 13 qui coopère en butée avec un épaulement formé dans le corps de l'élément d'appui 10, 11, correspondant. Les têtes 13 des axes de guidage 17 limitent le déplacement des éléments d'appui 10, 11 en direction du plan médian 16.

Un ressort 12 de compression est disposé entre chaque support 8, 9 et son élément d'appui correspondant 10, 11, pour solliciter les éléments d'appui 10, 11 vers une position déterminée en saillie par rapport aux mâchoires 6, 7 respectives.

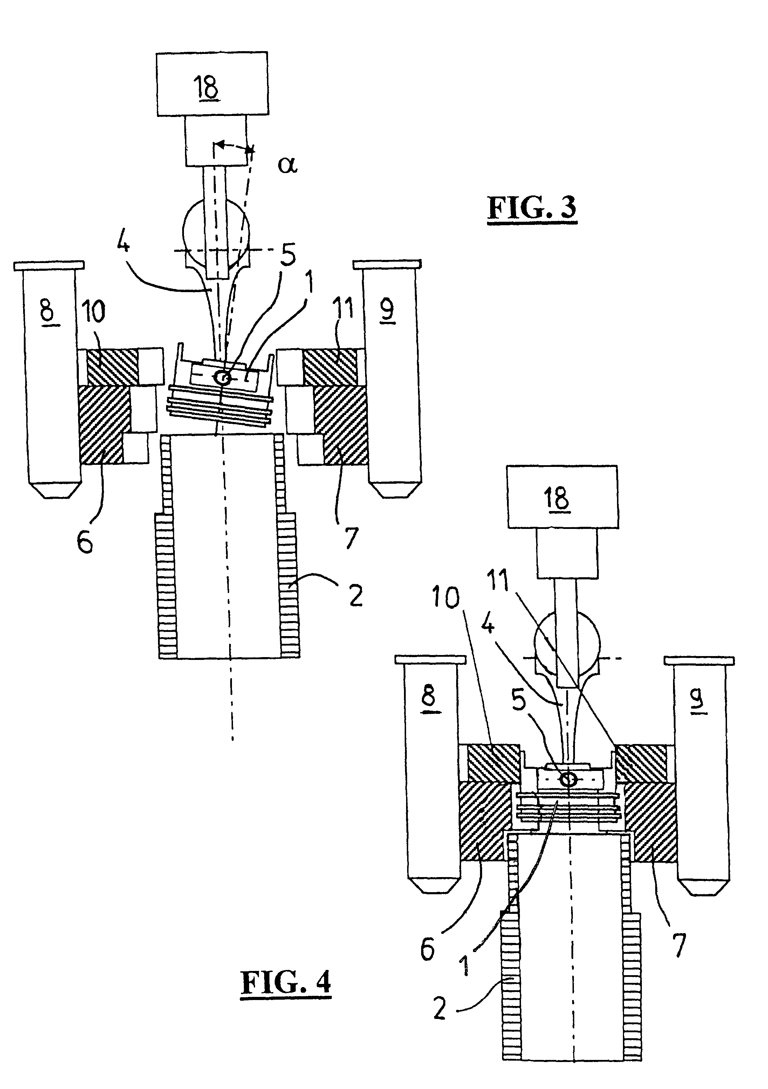

Pour assurer l'introduction du piston 1 dans une cavité cylindrique telle qu'une chemise 2, l'ensemble bielle 4 et piston 1 est disposé entre les mâchoires 6, 7 par un dispositif de manipulation 18 (figures 1 et 3) d'une ligne d'assemblage (non représentée). L'axe de symétrie longitudinal du piston 1 peut présenter un léger décalage angulaire α par rapport à l'axe de symétrie longitudinal de la bielle (figure 3).

Les deux supports 8, 9 du mécanisme de serrage sont ensuite rapprochés l'un de l'autre, les éléments d'appui 10, 11 viennent alors en contact avec le piston 1 (figure 4).

De préférence, les éléments d'appui 10, 11 sont agencés de façon à exercer deux appuis diamétralement opposés sur la surface extérieure du piston 1. De préférence, les éléments d'appui 10, 11 viennent s'appuyer sur la surface du piston 1 qui est située au niveau et/ou à l'arrière d'un plan transversal au piston 1 et passant par l'axe d'articulation 5 du piston 1 sur la bielle 4. C'est-à-dire que les éléments d'appui 10, 11 viennent s'appuyer sur la jupe du piston 1 qui s'étend en direction de la bielle 4. De cette façon, le piston 1 est positionné et maintenu dans une position déterminée dans laquelle les axes de symétrie longitudinaux du piston 1 et de la bielle 4 sont alignés.

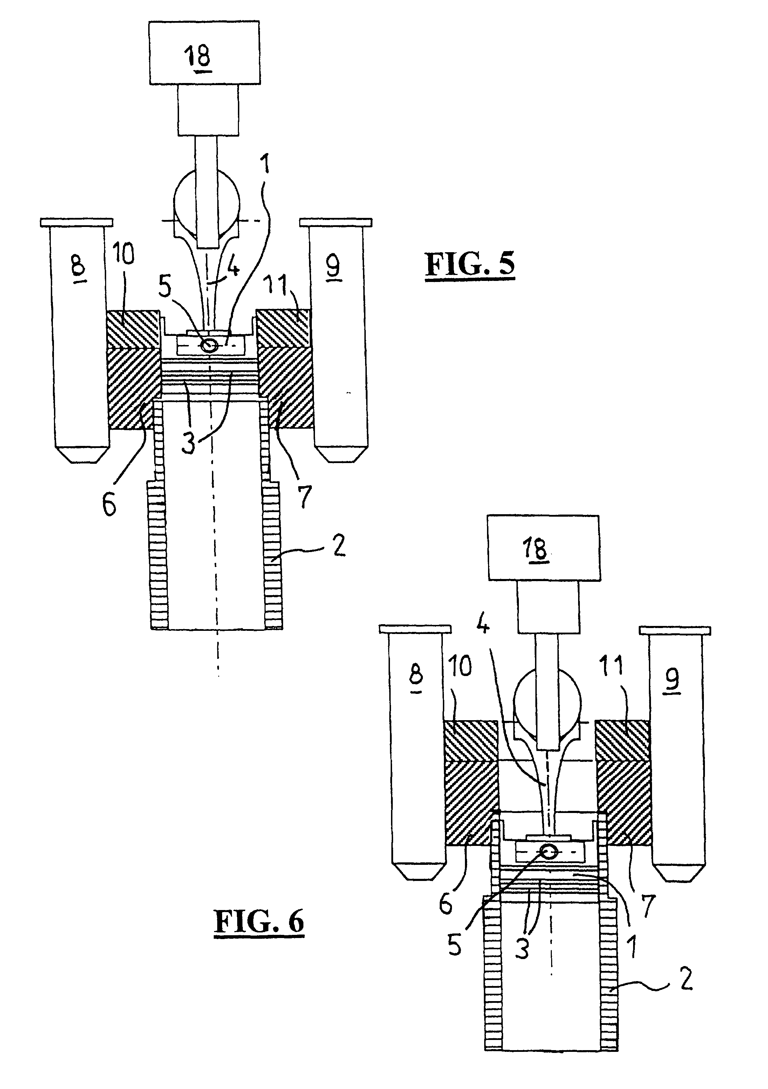

En continuant le rapprochement des supports 8, 9, les mâchoires 6, 7 entrent en contact avec les segments 3 et viennent serrer le piston 1 qui est touiours maintenu par les éléments d'appui 10, 11. Les ressorts 12 qui sollicitent les éléments d'appui 10, 11 vers le plan médian 16 sont alors comprimés. Les éléments d'appui 10, 11 coulissent vers leur support correspondant jusqu'à ce qu'ils arrivent en butées contre ces derniers (figure 5). A cet effet, les éléments d'appui 10, 11 ont de préférence des dimensions transverses identiques à celles des mâchoires 6, 7. C'est-à-dire que lorsque les mâchoires 6, 7 serrent le piston 1, la partie arrière des éléments d'appui 10, 11 est en butée sur les supports 8, 9 correspondants 10, 11, tandis que les surfaces intérieures des éléments d'appui 10, 11 et des mâchoires 6, 7 forment un même tube cylindrique autour du piston 1.

Lorsque les segments 3 sont suffisamment comprimés, le piston 1 peut être introduit dans la cavité de la chemise 2 par le dispositif de manipulation 18. Le caractère suffisant de la compression des segments 3 peut être déterminé par une détection de la fermeture complète des mâchoires 6, 7. Simultanément, un autre dispositif de manipulation (non représenté) peut déplacer la chemise 2 vers le piston 1 en sens inverse (figure 6). A cet effet, l'extrémité inférieure des mâchoires 6, 7 peut comporter un épaulement conformé pour accueillir en butée l'extrémité supérieure de la chemise 2. La surface intérieure cylindrique de la chemise 2 est alors parfaitement alignée avec la surface cylindrique intérieure délimitée par les mâchoires 6, 7. On conçoit donc aisément que le dispositif selon l'invention, tout en étant de structure simple, permet de compresser les segments du piston sans provoquer des problèmes de coincement ou de mauvais positionnement de ces derniers.

## Revendications

1. Procédé pour introduire un piston (1) dans une cavité cylindrique, notamment dans un cylindre ou une chemise (2) d'un cylindre d'un moteur à combustion interne, le piston (1) étant monté à l'extrémité d'une bielle (4) et comportant au moins une gorge annulaire dans laquelle est disposé un segment (3), le procédé comportant une étape de compression du ou des segments (3) dans leurs gorges respectives, l'étape de compression étant précédée d'une étape de positionnement et de maintien du piston (1) dans une position déterminée dans laquelle les axes de symétrie longitudinaux du piston (1) et de la bielle (4) sont alignés et coïncident avec un plan médian (16), **caractérisé en ce que** l'étape de positionnement et de maintien consiste à exercer au moins deux appuis selon une direction perpendiculaire au plan médian (16) et sensiblement diamétralement opposés sur la surface extérieure du piston (1) qui est située au niveau et/ou à l'arrière d'un plan transverse au piston (1) et passant par l'axe d'articulation (5) du piston (1) sur la bielle (4).

2. Procédé selon la revendication 1 **caractérisé en ce que** l'étape de positionnement et de maintien consiste à exercer au moins deux appuis diamétralement opposés sur la partie arrière ou jupe du piston (1).

3. Dispositif pour introduire un piston (1) dans une cavité cylindrique de mise en oeuvre du procédé selon l'une quelconque des revendications précédentes, comportant au moins une paire de mâchoires (6, 7) associées à un mécanisme de serrage (8, 9) apte à écarter ou rapprocher les mâchoires (6, 7) pour compresser les segments (3), **caractérisé en ce qu'**il comporte des moyens (10, 11) de positionnement et de maintien du piston (1) dans une position déterminée dans laquelle les axes de symétrie longitudinaux du piston (1) et de la bielle (4) sont alignés et coïncident avec un plan médian (16), les moyens (10, 11) de positionnement étant conformés pour exercer au moins deux appuis selon une direction perpendiculaire au plan médian (16) et sensiblement diamétralement opposés sur la surface extérieure du piston (1) qui est située au niveau et/ou à l'arrière d'un plan transversal au piston (1) et passant par l'axe d'articulation (5) du piston (1) sur la bielle (4).

4. Dispositif selon la revendication 3 **caractérisé en ce que** les moyens de positionnement (10, 11) sont conformés pour exercer deux appuis diamétralement opposés sur la partie arrière ou jupe du piston (1).

5. Dispositif selon l'une quelconque des revendications 3 ou 4 **caractérisé en ce que** les moyens de positionnement comportent deux éléments d'appui (10, 11) mobiles par rapport aux mâchoires (6, 7).

6. Dispositif selon l'une quelconque des revendications 3 à 5, comportant deux mâchoires (6, 7) montées respectivement sur deux supports (8, 9) mobiles du mécanisme de serrage, **caractérisé en ce qu'**il comporte deux éléments d'appui (10, 11) montés respectivement sur les deux supports (8, 9) et/ou sur les deux mâchoires (6, 7) de façon à faire saillie par rapport aux mâchoires (6, 7) dans une direction parallèle au déplacement desdites mâchoires lors du serrage, pour assurer le positionnement et le maintien du piston (1) avant la compression des segments (3) par les mâchoires (6, 7), les éléments d'appui (10, 11) étant agencés de manière mobile par rapport respectivement aux deux supports (8, 9) et/ou aux deux mâchoires (6, 7), pour permettre le rapprochement et le serrage des mâchoires (6, 7) sur le piston (1) pendant le maintien de ce dernier par les éléments d'appui (10, 11).

7. Dispositif selon la revendication 6 **caractérisé en ce qu'**il comporte des moyens élastiques (12) sollicitant les éléments d'appui (10, 11) vers une position déterminée en saillie par rapport aux mâchoires (6, 7), les moyens élastiques (12) étant conformés pour autoriser le recul des éléments d'appui (10, 11) par rapport aux mâchoires (6, 7) lors du serrage des mâchoires sur le piston (1) maintenu par les éléments d'appui (10, 11).

8. Dispositif selon la revendication 5 à 7 **caractérisé en ce qu'**il comporte des moyens de butée (13) limitant les déplacements de chacun des éléments d'appui (10, 11) entre une première position en saillie lors du desserrage des mâchoires (6, 7), et une seconde position en retrait lors du serrage des mâchoires (6, 7).

9. Dispositif selon l'une quelconque des revendications 5 à 8 **caractérisé en ce que** les éléments d'appui (10, 11) sont reliés respectivement aux mâchoires (6, 7) au moyen de liaisons glissières correspondantes (14), permettant le coulissement des éléments d'appui (10, 11) par rapport aux mâchoires (6, 7) dans une direction parallèle au déplacement desdites mâchoires (6, 7) lors du serrage.

## Claims

1. Method for introducing a piston (1) into a cylindrical cavity, in particular into a cylinder or a wall (2) of a cylinder of an internal combustion engine, the piston (1) being mounted at the end of a connecting rod (4) and comprising at least one annular groove in which a segment (3) is arranged, the method comprising a step of compression of the segment(s) (3) in their respective grooves, the step of compression being preceded by a step of positioning and holding the piston (1) in a predetermined position in which the longitudinal axes of symmetry of the piston (1) and of the connecting rod (4) are aligned and coincide with a median plane (16), **characterised in that** the step of positioning and holding consists in exerting at least two substantially diametrically opposite supports in a direction perpendicular to the median plane (16) on the outer surface of the piston (1), which is located in and/or behind a plane transverse to the piston (1) and passing through the axis of articulation (5) of the piston (1) to the connecting rod (4).

2. Method according to Claim 1 **characterised in that** the step of positioning and holding consists in exerting at least two diametrically opposite supports on the rear portion or skirt of the piston (1).

3. Device for introducing a piston (1) into a cylindrical cavity for implementing the method according to any one of the preceding claims, comprising at least one pair of jaws (6, 7) associated with a tightening mechanism (8, 9) capable of moving the jaws (6, 7) apart or bringing them together in order to compress the segments (3), **characterised in that** it comprises means (10, 11) for positioning and holding the piston (1) in a predetermined position in which the longitudinal axes of symmetry of the piston (1) and the connecting rod (4) are aligned and coincide with a median plane (16), the positioning means (10, 11) being shaped so as to exert at least two substantially diametrically opposite supports in a direction perpendicular to the median plane (16) on the outer surface of the piston (1), which is located in and/or behind a plane transverse to the piston (1) and passing through the axis of articulation (5) of the piston (1) to the connecting rod (4).

4. Device according to Claim 3 **characterised in that** the positioning means (10, 11) are shaped so as to exert two diametrically opposite supports on the rear portion or skirt of the piston (1).

5. Device according to any one of Claims 3 or 4 **characterised in that** the positioning means comprise two support elements (10, 11) that are mobile with respect to the jaws (6, 7).

6. Device according to any one of Claims 3 to 5, comprising two jaws (6, 7) mounted respectively on two mobile mountings (8, 9) for the tightening mechanism, **characterised in that** it comprises two support elements (10, 11) mounted respectively on the two mountings (8, 9) and/or on the two jaws (6, 7) so as to project out from the jaws (6, 7) in a direction parallel to the displacement of said jaws during tightening, in order to ensure the positioning and holding of the piston (1) before the compression of the segments (3) by the jaws (6, 7), the support elements (10, 11) being arranged so as to be mobile with respect to the two mountings (8, 9) and/or to the two jaws (6, 7), in order to allow the jaws (6, 7) to be brought together and tightened on the piston (1) while the latter is being held by the support elements (10, 11).

7. Device according to Claim 6 **characterised in that** it comprises resilient means (12) acting upon the support elements (10, 11) towards a predetermined position projecting out from the jaws (6, 7), the resilient means (12) being shaped so as to allow the support elements (10, 11) to be set back from the jaws (6, 7) when the jaws are being tightened on the piston (1) held by the support elements (10, 11).

8. Device according to Claim 5 to 7 **characterised in that** it comprises stop means (13) limiting the displacements of each of the support elements (10, 11) between a first projecting position when the jaws (6, 7) are loosened, and a second, withdrawn position when the jaws (6, 7) are tightened.

9. Device according to any one of Claims 5 to 8 **characterised in that** the support elements (10, 11) are respectively connected to the jaws (6, 7) by means of corresponding slide connections (14), allowing the support elements (10, 11) to slide with respect to the jaws (6, 7) in a direction parallel to the displacement of said jaws (6, 7) during tightening.

## Patentansprüche

1. Verfahren zum Einführen eines Kolbens (1) in einen zylindrischen Hohlraum, insbesondere in einen Zylinder oder eine Zylinderlaufbüchse (2) eines Verbrennungsmotors, wobei der Kolben (1) an das Ende einer Pleuelstange (4) montiert ist und mindestens eine Ringnut aufweist, in der ein Segment (3) angeordnet ist, wobei das Verfahren einen Schritt des Zusammendrückens des Segments (oder der Segmente) (3) in ihren Nuten aufweist, wobei vor dem Schritt des Zusammendrückens ein Schritt der Positionierung und des Halts des Kolbens (1) in einer bestimmten Stellung liegt, in der die Längssymmetrieachsen des Kolbens (1) und der Pleuelstange (4) miteinander fluchten und mit einer Mittelebene (16) zusammenfallen, **dadurch gekennzeichnet, dass** der Schritt der Positionierung und des Halts darin besteht, mindestens zwei Drücke in einer zur Mittelebene (16) senkrechten Richtung und im wesentlichen einander diametral entgegengesetzt auf die Außenfläche des Kolbens (1) auszuüben, die sich in Höhe von und/oder hinter einer Querebene zum Kolben (1) befindet und durch die Drehachse (5) des Kolbens (1) um die Pleuelstange (4) verläuft.

2. Verfahren nach Anspruch 1, **dadurch gekennzeichnet, dass** der Schritt der Positionierung und des Halts darin besteht, mindestens zwei einander diametral entgegengesetzte Drücke auf das Hinterteil oder den Mantel des Kolbens (1) auszuüben.

3. Vorrichtung zur Einführung eines Kolbens (1) in einen zylindrischen Hohlraum zur Anwendung des Verfahrens nach einem der vorhergehenden Ansprüche, mit mindestens einem Paar von Klemmbacken (6, 7), die einem Klemmmechanismus (8, 9) zugeordnet sind, der in der Lage ist, die Klemmbacken (6, 7) voneinander zu entfernen oder einander anzunähern, um die Segmente (3) zusammenzudrücken, **dadurch gekennzeichnet, dass** sie Mittel (10, 11) zur Positionierung und zum Halt des Kolbens (1) in einer bestimmten Stellung aufweist, in der die Längssymmetrieachsen des Kolbens (1) und der Kolbenstange (4) miteinander fluchten und mit einer Mittelebene (16) zusammenfallen, wobei die Positioniermittel (10, 11) so ausgebildet sind, dass sie mindestens zwei Drücke in einer Richtung senkrecht zur Mittelebene (16) und im wesentlichen einander diametral entgegengesetzt auf die Außenfläche des Kolbens (1) ausüben, die sich in Höhe von und/oder hinter einer Querebene zum Kolben (1) befindet und durch die Drehachse (5) des Kolbens (1) um die Pleuelstange (4) verläuft.

4. Vorrichtung nach Anspruch 3, **dadurch gekennzeichnet, dass** die Positioniermittel (10, 11) ausgebildet sind, um mindestens zwei diametral entgegengesetzte Drücke auf das Hinterteil oder den Mantel des Kolbens (1) auszuüben.

5. Vorrichtung nach einem der Ansprüche 3 oder 4, **dadurch gekennzeichnet, dass** die Positioniermittel zwei in Bezug auf die Klemmbacken (6, 7) bewegliche Auflageelemente (10, 11) aufweisen.

6. Vorrichtung nach einem der Ansprüche 3 bis 5, die zwei Klemmbacken (6, 7) aufweist, die auf zwei bewegliche Träger (8, 9) des Klemmmechanismus montiert sind, **dadurch gekennzeichnet, dass** sie zwei Auflageelemente (10, 11) aufweist, die jeweils auf die beiden Träger (8, 9) und/oder auf die beiden Klemmbacken (6, 7) montiert sind, derart, dass sie in Bezug auf die Klemmbacken (6, 7) in einer Richtung parallel zur Verschiebung der Klemmbacken beim Klemmvorgang vorstehen, um die Positionierung und den Halt des Kolbens (1) vor dem Zusammendrücken der Segmente (3) durch die Klemmbacken (6, 7) zu gewährleisten, wobei die Auflageelemente (10, 11) jeweils in Bezug auf die beiden Träger (8, 9) und/oder die beiden Klemmbacken (6, 7) beweglich gestaltet sind, um die Annäherung und das Klemmen der Klemmbacken (6, 7) auf dem Kolben (1) während des Halts dieses letzteren durch die Auflageelemente (10, 11) zu ermöglichen.

7. Vorrichtung nach Anspruch 6, **dadurch gekennzeichnet, dass** sie elastische Mittel (12) aufweist, welche die Auflageelemente (10, 11) in eine bestimmte Stellung beaufschlagen, in der sie in bezug auf die Klemmbacken (6, 7) vorstehen, wobei die elastischen Mittel (12) ausgebildet sind, um beim Klemmen der Klemmbacken auf dem von den Auflageelementen (10, 11) gehaltenen Kolben (1) das Zurückweichen der Auflageelemente (10, 11) in Bezug auf die Klemmbacken (6, 7) zu erlauben.

8. Vorrichtung nach Anspruch 5 bis 7, **dadurch gekennzeichnet, dass** sie Anschlagmittel (13) aufweist, welche die Verschiebungen jedes der Auflageelemente (10, 11) zwischen einer ersten, vorstehenden Stellung während des Lösens der Klemmbacken (6, 7) und einer zweiten, zurückgezogenen Stellung beim Zusammenklemmen der Klemmbacken (6, 7) begrenzt.

9. Vorrichtung nach einem der Ansprüche 5 bis 8, **dadurch gekennzeichnet, dass** die Auflageelemente (10, 11) mit den Klemmbacken (6, 7) jeweils mit Hilfe von entsprechenden Gleitschienenverbindungen (14) verbunden sind, die das Gleiten der Auflageelemente (10, 11) in Bezug auf die Klemmbacken (6, 7) in einer Richtung parallel zur Verschiebung der Klemmbacken (6, 7) beim Klemmvorgang erlauben.
